# DEMANDE DE BREVET EUROPEEN

(11) **EP 3 483 454 A1**
(43) Date de publication de la demande: **15.05.2019**
(21) Numéro de dépôt: 17201210.6
(22) Date de dépôt: 10.11.2017
(51) Int. Cl.: F15B 13/044, H02K 21/14, H02K 1/14

(54) **COMMANDE HYDRAULIQUE**

(71) Demandeur: Société Industrielle de Sonceboz S.A., 2605 Sonceboz (CH)
(72) Inventeur: NIKLAUS, Joël, 2504 Bienne (CH); BILLET, Lionel, 25410 Dannemarie sur Crète (FR); BOIVIN, FABRICE, 25500 Les Fins (FR)
(74) Mandataire: reuteler & cie SA

(57) **Abrégé**

Commande hydraulique (1) comprenant au moins une vanne hydraulique, chaque vanne hydraulique comportant un distributeur hydraulique (11) et un actionneur électrique (3). Le distributeur hydraulique comprend un tiroir de vanne (13) monté coulissant dans un corps (19) comprenant des canaux hydrauliques (17). L'actionneur électrique est fixé au corps du distributeur hydraulique et comprend un moteur électrique (6), un circuit électronique (10) comportant une carte de circuit (24), un organe de sortie (4) à déplacement linéaire couplé au tiroir de commande, un réducteur (8) comportant des roues d'engrenage (22) couplant le moteur à l'organe de sortie, et un boîtier (2) dans lequel le moteur électrique (6), le circuit électronique (10) et le réducteur (8) sont montés. Le moteur est un moteur à courant continu sans balais commandé en boucle fermée.

## Description

La présente invention concerne le domaine des commandes hydrauliques, notamment comprenant des vannes hydrauliques, chacune comprenant un distributeur hydraulique et un actionneur électrique.

Des commandes hydrauliques sont utilisées dans de nombreux domaines, par exemple pour des véhicules agricoles, des engins de chantier, des grues, et d'autres appareils de levage et de manutention.

Certaines commandes hydrauliques comprennent une pluralité de vannes hydrauliques juxtaposées, chaque vanne formée par un distributeur hydraulique couplé à un actionneur électrique actionnant un axe de commande hydraulique, notamment un tiroir de vanne. Un actionneur électrique pour la commande de distributeurs hydrauliques est décrit par exemple dans le brevet US 7,591,448.

Les vannes hydrauliques d'une commande hydraulique sont disposées d'une manière juxtaposée, espacées d'une distance que les actionneurs des distributeurs doivent respecter. L'axe de commande du distributeur hydraulique est poussé par un ressort précontraint qui le déplace dans une position de sécurité (position dite « *fail safe* ») lorsque le système hydraulique tombe en panne. Pour vaincre la force du ressort et assurer un fonctionnement très dynamique, l'actionneur doit fournir une force dynamique élevée.

En raison de l'environnement exigeant dans lequel l'actionneur est utilisé dans beaucoup d'applications hydrauliques, il est aussi important que l'actionneur soit robuste et fiable, pouvant supporter des vibrations, des changements de température élevés et des chocs.

Le coût de l'actionneur est également un facteur important.

Il est également important, pour assurer un fonctionnement fiable, de connaître la position de l'axe de commande de manière précise et fiable.

L'actionneur électrique décrit dans le brevet US 7,591,448 est certes compact et précis, toutefois le coût de production d'un tel actionneur est élevé en raison du nombre de composants, le coût de fabrication des composants, et la complexité de l'assemblage.

Un objet de l'invention est de fournir une commande hydraulique compacte, performante, et fiable.

Il est avantageux de fournir une commande hydraulique qui est économique à fabriquer.

Un objet particulier de l'invention est de fournir une commande hydraulique avec un actionneur électrique plat pour un distributeur hydraulique, ayant une grande densité de couple pour sa taille et qui est économique à fabriquer.

Un autre objet de l'invention est de fournir un actionneur électrique pour une commande hydraulique, compact, performant et fiable.

Il est avantageux de fournir un actionneur électrique pour une commande hydraulique, ayant un haut rendement.

Des objets de l'invention sont réalisés par une commande hydraulique selon la revendication 1.

Les revendications dépendantes décrivent des caractéristiques avantageuses de l'invention.

Dans la présente invention, on décrit une commande hydraulique comprenant au moins une vanne hydraulique, chaque vanne hydraulique comprenant un distributeur hydraulique et un actionneur électrique. Le distributeur hydraulique comprend un tiroir de vanne monté coulissant dans un corps comprenant des canaux hydrauliques. L'actionneur électrique est fixé au corps du distributeur hydraulique et comprend un moteur électrique, un circuit électronique comportant une carte de circuit, un organe de sortie à déplacement linéaire couplé au tiroir de commande, un réducteur comportant des roues d'engrenage couplant le moteur à l'organe de sortie, et un boîtier dans lequel le moteur électrique, le circuit électronique et le réducteur sont montés. Selon un premier aspect de l'invention, le moteur est un moteur à courant continu sans balais commandé en boucle fermé.

Avantageusement, comparé avec un moteur pas-à-pas utilisé pour l'actionnement d'une vanne hydraulique dans les commandes hydrauliques conventionnels, l'utilisation d'un moteur à courant continu sans balais commandé en boucle fermée permet de transmettre de plus forts pics de force au tiroir de vanne et de travailler de manière plus sécurisé, notamment en ayant une grande fiabilité de positionnement de l'organe de sortie de l'actionneur électrique.

Il convient de préciser qu'une pluralité de distributeurs hydrauliques empilés ou juxtaposés peut comprendre un corps (comprenant des canaux hydrauliques) commun et monobloc, ou une pluralité de corps (p. ex. un par vanne) assemblés.

Avantageusement, l'actionneur électrique selon l'invention est très compact et notamment est caractérisé par l'une ou plusieurs des ratios suivants :
- un ratio *e*/*E* d'une épaisseur e du stator du moteur électrique, incluant l'épaisseur de bobinage, sur une épaisseur *E* de l'actionneur électrique est supérieur à 0.45, la direction de mesure de l'épaisseur étant une direction d'empilement ou de juxtaposition des vannes hydrauliques formant la commande hydraulique.
- un ratio *L*/*E* d'une longueur *L* de l'actionneur électrique sur une épaisseur *E* de l'actionneur électrique est supérieur à 2.5 et inférieur à 4, la direction de mesure de la longueur étant orthogonale à une direction d'empilement des vannes hydrauliques formant la commande hydraulique et une direction d'actionnement du tiroir de vanne.
- un ratio *H*/*E* d'une hauteur *H* de l'actionneur électrique sur une épaisseur *E* de l'actionneur électrique est supérieur à 2 et inférieur à 3.5, la direction de mesure de la hauteur étant la direction d'actionnement du tiroir de vanne.

Le moteur électrique comporte un stator et un rotor, le rotor comprenant un aimant définissant une pluralité de pôles de rotor et le stator comprenant une armature magnétique et une pluralité de bobines montées sur l'armature magnétique.

Selon un deuxième aspect de l'invention, les roues d'engrenage incluent au moins une première roue et une deuxième roue, la première roue comprenant une couronne dentée engageant un pignon du rotor et un pignon engageant une couronne dentée de la deuxième roue. La couronne dentée de la deuxième roue est disposée sur un côté opposé de la carte de circuit au moteur électrique, la deuxième roue étant disposée du côté d'un couvercle du boîtier et le moteur électrique étant monté dans la base du boîtier. La couronne dentée de la première roue est disposée à la hauteur de la carte du circuit, dans une découpe de la carte de circuit.

Selon un troisième aspect de l'invention, la carte de circuit est disposée au-dessus d'une extrémité axiale de l'aimant du rotor, des sondes magnétiques, par exemple des sondes à effet Hall, étant disposées sur la carte de circuit au-dessus des segments magnétiques de l'aimant, les sondes magnétiques étant disposées dans un arc de cercle autour du rotor d'un angle (α) inférieur à 60 degrés.

Selon un quatrième aspect de l'invention, le rotor comprend un aimant sous forme cylindrique et une culasse disposée coaxialement à l'intérieur de l'aimant cylindrique, la culasse et l'aimant étant montés dans un support en matière plastique surmoulée, le support comprenant des brides s'étendant radialement au-dessus des extrémités axiales de la culasse et de l'aimant.

Dans une forme d'exécution avantageuse, les bobines sont montées sur des branches de l'armature magnétique disposées dans un arc de moins de 180 degrés autour de l'axe de rotation du rotor, un axe de rotation de la première roue du réducteur étant monté à côté d'une partie du stator sans bobines.

Dans une forme d'exécution avantageuse, la deuxième roue comprend un marqueur de position disposé sur une face de la couronne dentée vis-à-vis de la carte de circuit et un détecteur de position est monté sur la carte de circuit sous le marqueur de position.

Dans une forme d'exécution avantageuse, le détecteur de position est sous forme d'un capteur à effet Hall et le marqueur de position est sous forme d'un aimant annulaire.

Dans une forme d'exécution avantageuse, la deuxième roue du réducteur comprend un pignon qui engage une crémaillère connectée à l'organe de sortie à déplacement linéaire.

Dans une forme d'exécution avantageuse, des fils conducteurs des bobines sont connectés à des bornes électriques formées de pièces étampées insérées dans ou surmoulées par une matière plastique formant intégralement la base du boitier et supportant l'armature et les bobines.

Dans une forme d'exécution avantageuse, l'actionneur comprend un connecteur pour connecter le circuit électronique à une commande externe, un boîtier du connecteur étant formé de manière solidaire avec la base du boîtier, des bornes électriques du connecteur étant surmoulées dans la base du boîtier et comprenant des parties de connexion orientées axialement pour une connexion avec la carte de circuit.

Dans une forme d'exécution avantageuse, l'armature magnétique et les bobines y compris avec des bornes électriques pour la connexion à une carte de circuit sont surmoulées dans la matière plastique formant la base du boitier.

Dans une forme d'exécution avantageuse, le jeu entre le diamètre extérieur de la culasse et le diamètre intérieur de l'aimant est dans une gamme de 50 à 200 microns.

Dans une forme d'exécution avantageuse, le support du rotor comprend un pignon solidaire du support formé d'une matière plastique injectée.

Dans une forme d'exécution, la commande hydraulique comprend un ressort de rappel précontraint agissant sur le tiroir de vanne. Dans une variante, le ressort de rappel est monté à une interface entre le corps du distributeur hydraulique et l'actionneur électrique, dans un logement formé dans le boitier de l'actionneur électrique.

D'autres buts et aspects avantageux de l'invention apparaîtront à la lecture des revendications et/ou de la description détaillée ci-après de formes d'exécution de l'invention en relation avec les figures, dans lesquelles :
La Fig. 1 est une vue en perspective d'une commande hydraulique selon une première forme d'exécution de l'invention ;
La Fig. 2 est une vue en coupe de la commande hydraulique selon la figure 1;
La Fig. 3 est une vue d'un actionneur électrique de la commande hydraulique selon la figure 1;
La Fig. 4 est une vue en perspective éclatée de l'actionneur électrique selon la figure 3;
La Fig. 5 est une vue en coupe à travers la ligne C-C de l'actionneur selon la figure 3;
La Fig. 6 est une vue en coupe à travers la ligne E-E de l'actionneur selon la figure 3;
La Fig. 7 est une vue en coupe à travers la ligne D-D de l'actionneur selon la figure 3;
La Fig. 7a est une vue agrandie d'une partie de la figure 7;
La Fig. 8 est une vue en perspective d'une commande hydraulique selon une deuxième forme d'exécution de l'invention ;
La Fig. 9 est une vue en coupe de la commande hydraulique selon la figure 8;
La Fig. 10 est une vue d'un actionneur électrique de la commande hydraulique selon la figure 8;
La Fig. 11 est une vue en coupe à travers la ligne A-A de l'actionneur selon la figure 10;
La Fig. 12 est une vue en coupe à travers la ligne B-B de l'actionneur selon la figure 10;
La Fig. 13 est une vue en coupe de l'actionneur selon la figure 10;
La Fig. 14 est une vue en perspective d'un rotor d'un actionneur électrique d'une commande hydraulique selon une forme d'exécution de l'invention ;
La Fig. 15 est une vue en perspective d'un stator d'un actionneur électrique d'une commande hydraulique selon une forme d'exécution de l'invention.

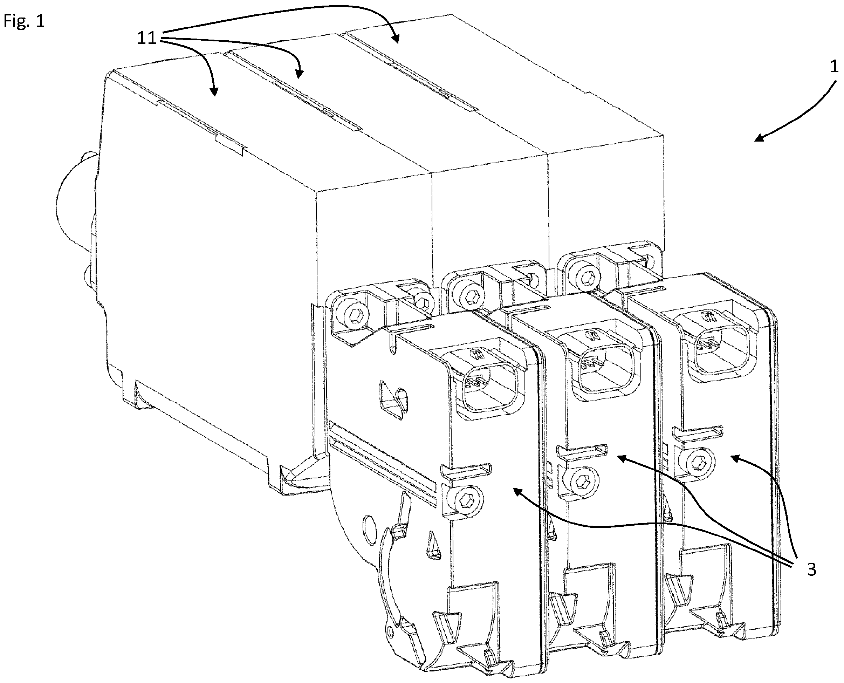

Faisant référence aux figures, commençant par les figures 1, 2, 8 et 9, une commande hydraulique 1 comprend une pluralité de vannes hydrauliques 11, 3 juxtaposées ou empilées. Chaque vanne hydraulique comprend un distributeur hydraulique 11 et un actionneur électrique 3 correspondant, un seul actionneur électrique étant associé à un seul distributeur hydraulique.

Chaque vanne hydraulique comprend un tiroir de vanne 13 monté coulissant dans un corps 19 comprenant des canaux hydrauliques 17. La position et la configuration des canaux hydrauliques ainsi que le profil (non-illustré) du tiroir de vanne sont adaptés à la fonction hydraulique et sont en soi connus et ne seront pas décrits plus en détail dans la présente. Le nombre de vannes juxtaposées formant la commande hydraulique 1 peut varier en fonction de l'application. Compte tenu de l'arrangement empilé des vannes, il y a un avantage à ce que les distributeurs ainsi que les actionneurs aient un encombrement faible dans la direction de la juxtaposition. L'actionneur électrique 3 a donc une épaisseur *E* limitée par l'épaisseur du distributeur hydraulique 11. L'actionneur électrique est fixé au corps 19 du distributeur hydraulique sur une interface 21 du corps constituant l'une des faces mineures du corps.

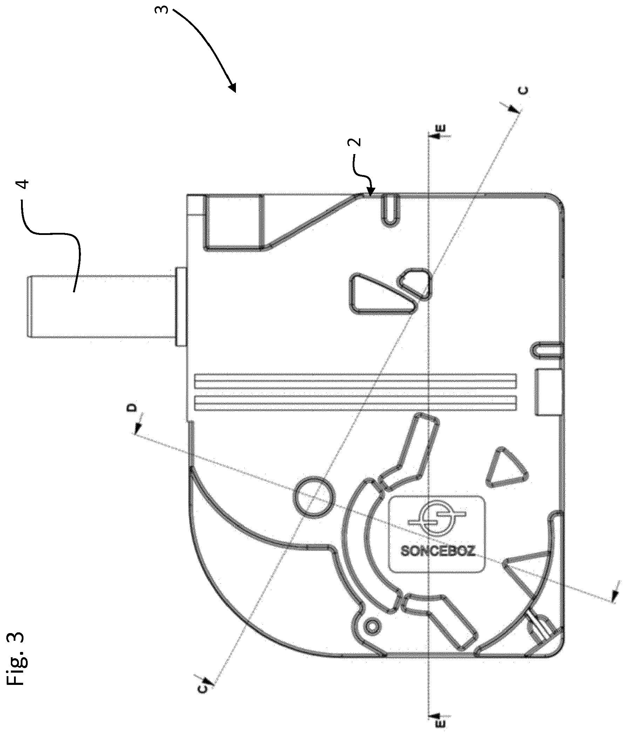

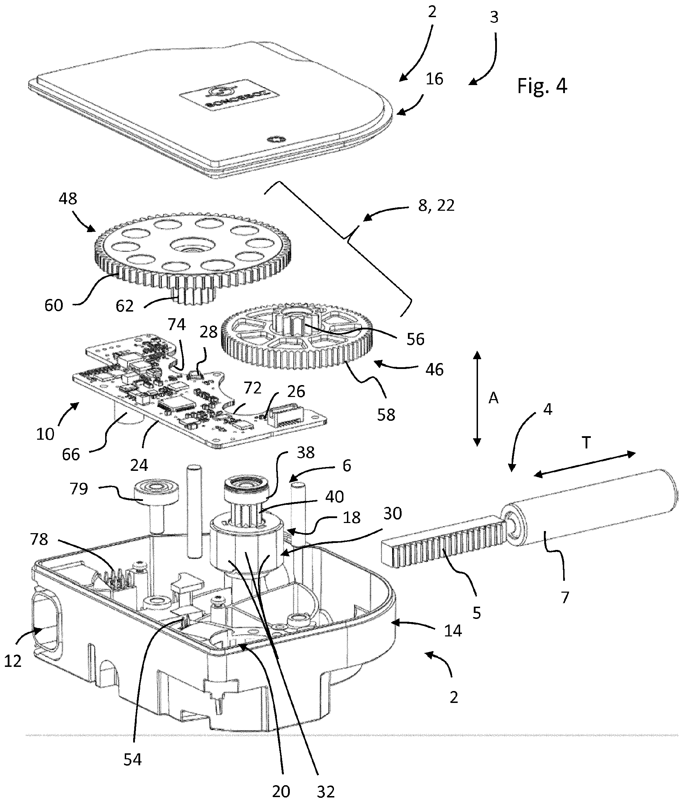

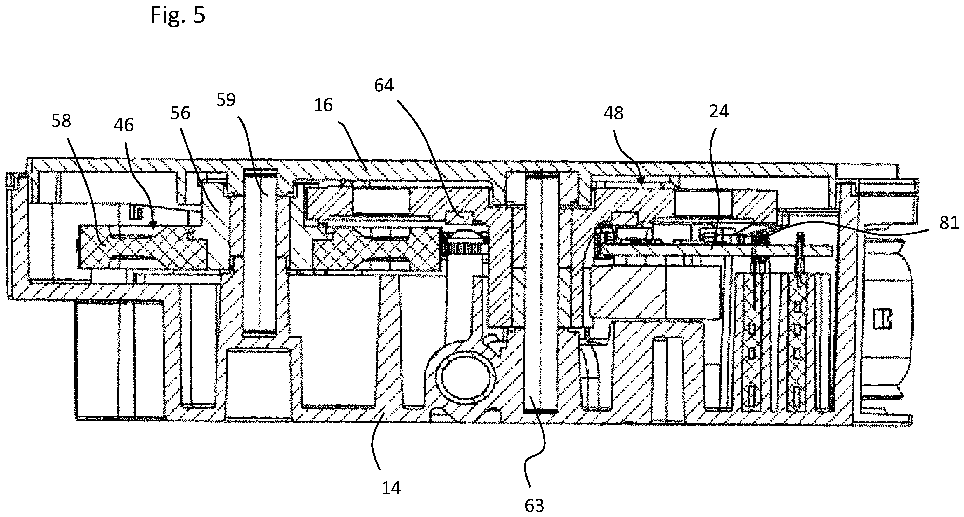

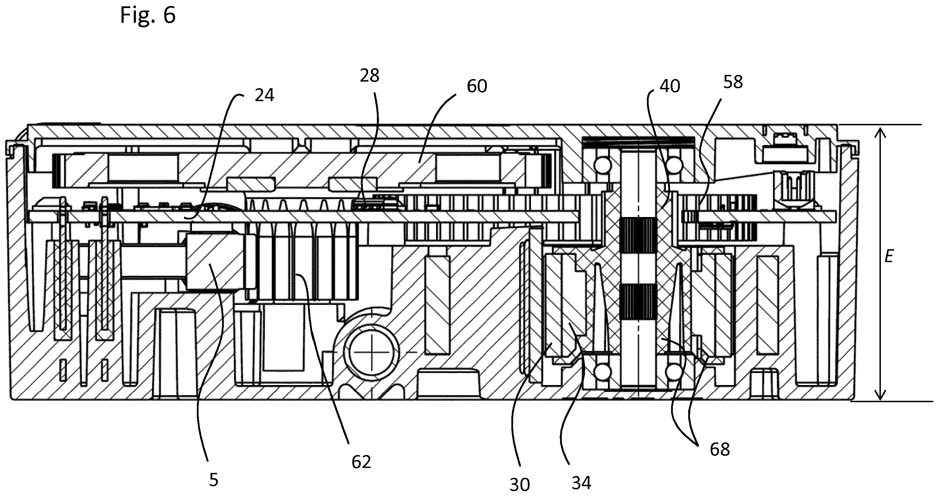

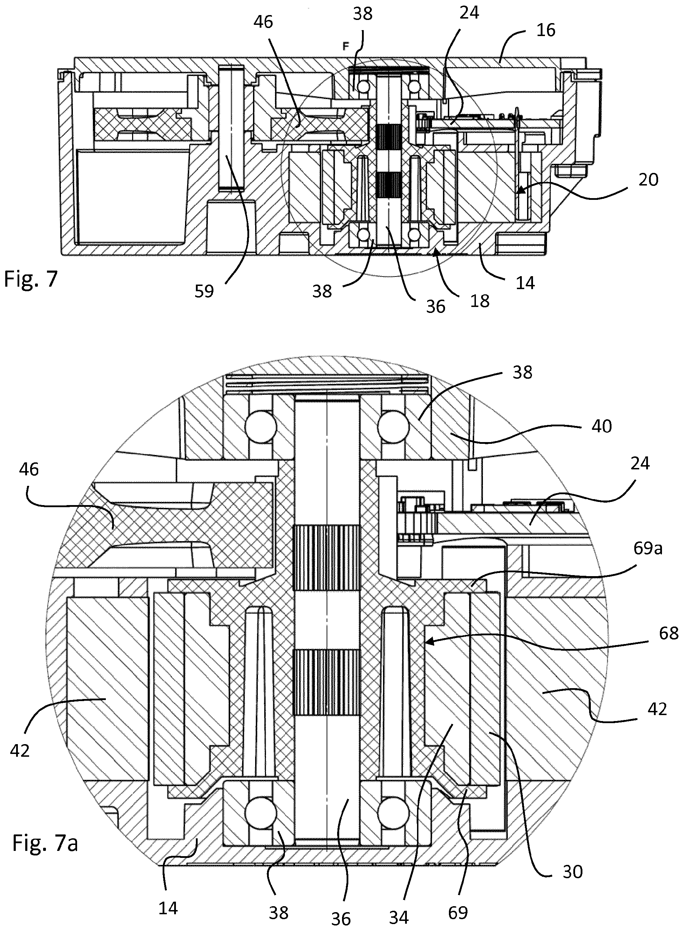

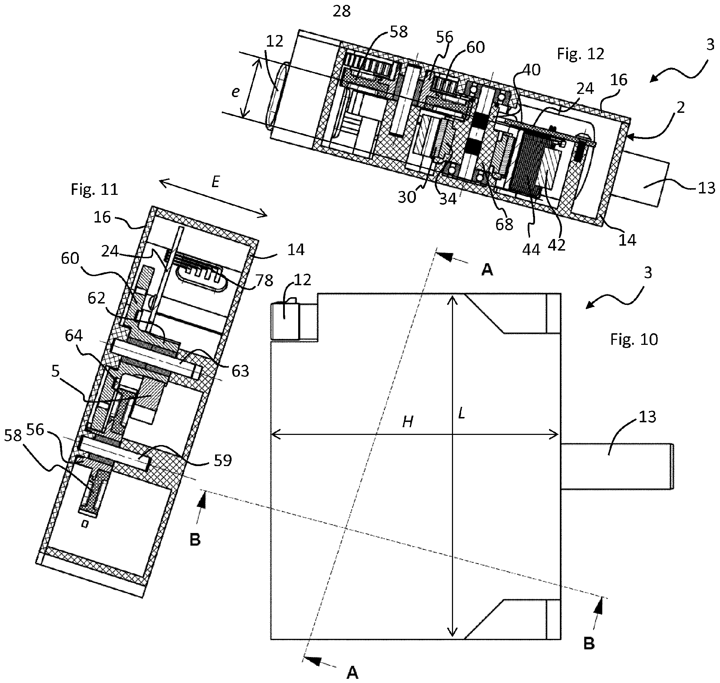

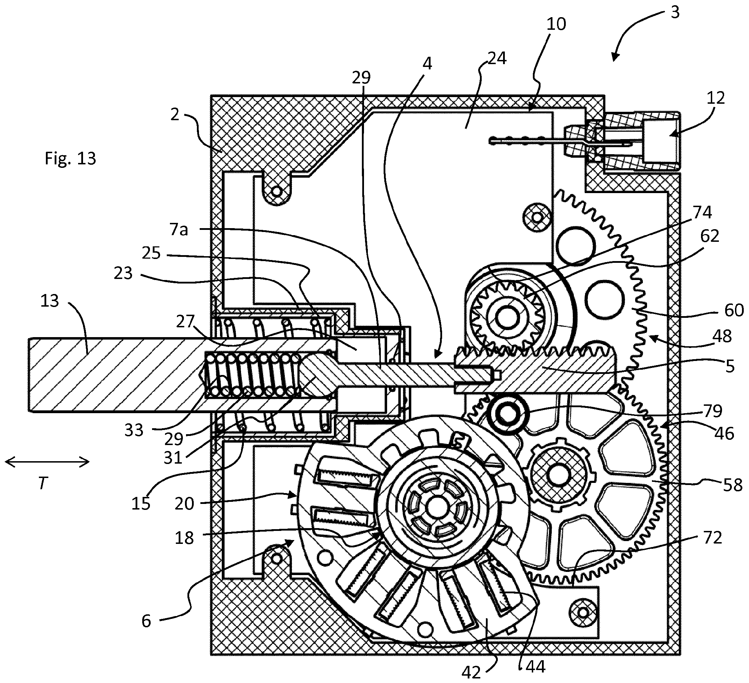

Faisant référence notamment aux figures 3-7a et 10-13 l'actionneur électrique comprend un moteur électrique 6, un circuit électronique 10 comportant une carte de circuit 24, un organe de sortie 4 à déplacement linéaire couplé au tiroir de vanne 13, un réducteur 8 comportant des roues d'engrenage 22 couplant le moteur à l'organe de sortie, et un boîtier 2 dans lequel le moteur électrique 6, le circuit électronique 10 et le réducteur 8 sont montés. L'organe de sortie 4 est connecté, ou solidaire avec, une crémaillère 5 disposée dans le boîtier 2 de l'actionneur électrique.

Le moteur 6 de l'actionneur électrique est un moteur à courant continu sans balais commandé en boucle fermé. Comparé avec un moteur pas-à-pas utilisé pour l'actionnement d'une vanne hydraulique dans les commandes hydrauliques conventionnelles, l'utilisation d'un moteur à courant continu sans balais commandé en boucle fermée permet de transmettre de plus forts pics de force au tiroir de vanne et de travailler de manière plus sécurisée, notamment en ayant une grande fiabilité de positionnement de l'organe de sortie de l'actionneur électrique.

La commande hydraulique 1 peut comprendre, pour chaque vanne hydraulique, un ressort de rappel 15 précontraint. Le tiroir de vanne est poussé par le ressort de rappel 15 précontraint qui le déplace dans une position de sécurité (position dite « fail safe ») lorsque le système hydraulique tombe en panne. Pour vaincre la force du ressort de rappel 15 et assurer un fonctionnement très dynamique, l'actionneur électrique doit fournir une force dynamique élevée. Le choix d'un moteur à courant continu sans balais commandé en boucle fermée permet de répondre à cette exigence de manière fiable, dans une configuration économique et compacte.

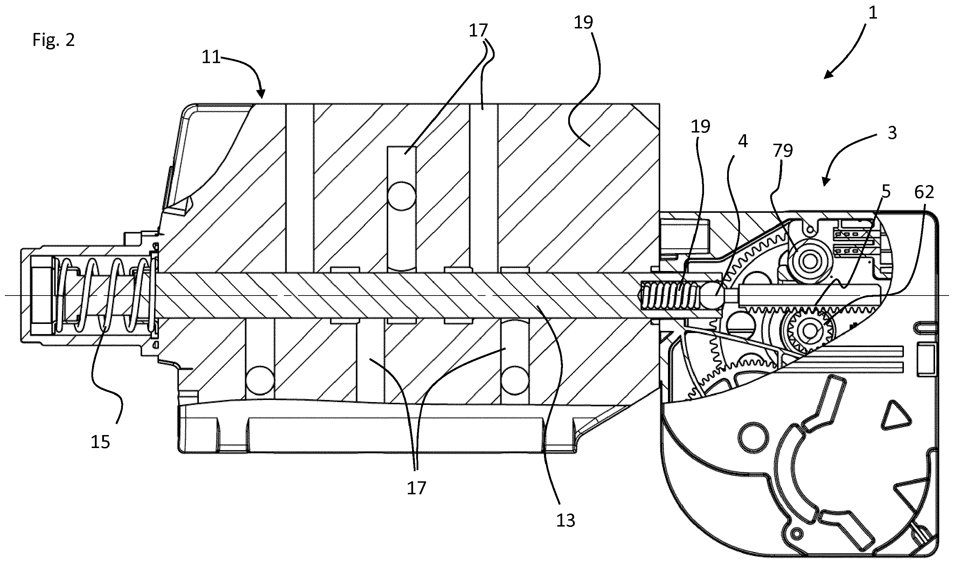

Dans une première variante, illustrée dans les figures 1 et 2, le ressort de rappel 15 est monté dans un logement dans le corps 19 du distributeur hydraulique 11.

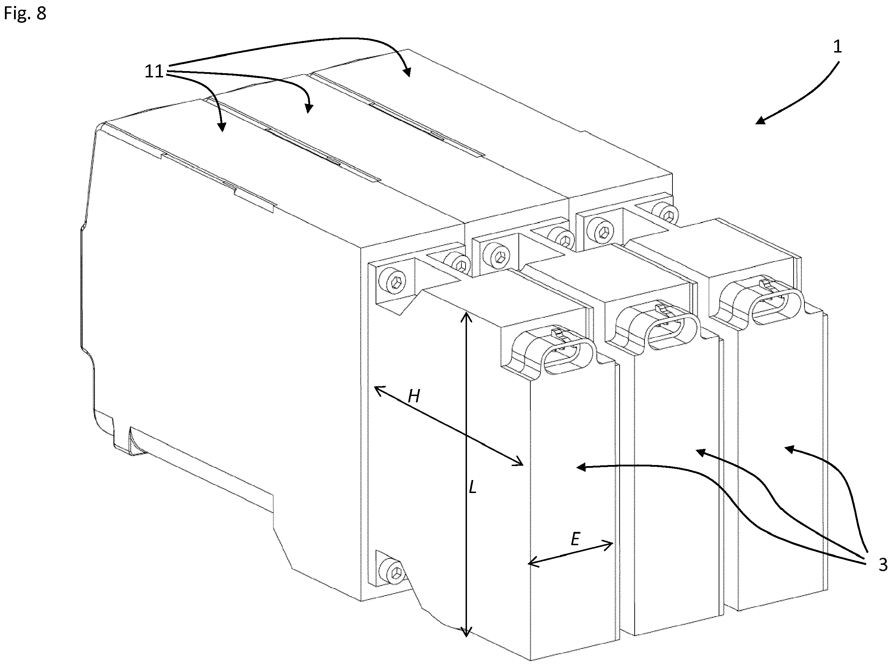

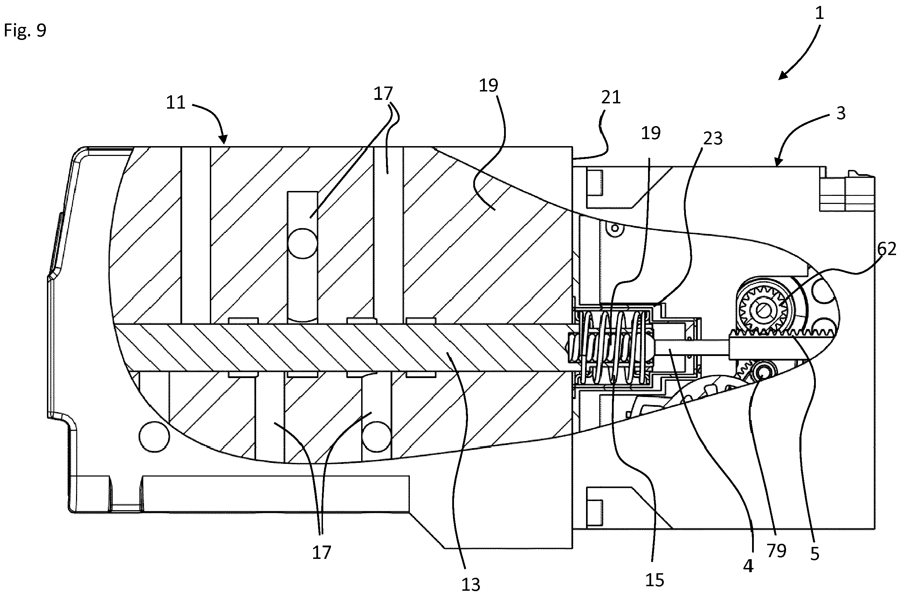

Dans une deuxième variante, illustrée dans les figures 8 et 9, le ressort de rappel 15 est monté à l'interface entre le corps 19 et l'actionneur électrique, dans un logement 23 formé dans le boitier 2 de l'actionneur électrique. L'axe de l'organe de sortie 4 de l'actionneur électrique 3 comprend une partie d'accouplement 7a montée dans une chambre 27 du distributeur hydraulique dans lequel le ressort de rappel 15 est monté. La chambre 27 est fermée par un capuchon 25 monté sur le corps du distributeur hydraulique, la chambre étant remplie de fluide hydraulique. Un joint 29 est disposé entre un orifice de la paroi du capuchon 25 et l'axe 7a de l'organe de sortie pour assurer l'étanchéité entre le circuit hydraulique et l'actionneur électrique. Pour l'assemblage de l'actionneur 3 et du distributeur 11, la crémaillère 5 est préassemblé à l'organe de sortie 4, et lors de la fixation de l'actionneur électrique 3 au distributeur hydraulique 11, insérée dans le boitier 2 entre le roulement de support 79 et le pignon 62.

L'organe de sortie 4 peut être couplée au tiroir de vanne 13 au moyen d'une liaison amovible configurée pour absorber des tolérances de positionnement, par exemple sous forme d'un joint à rotule. Dans cet exemple, l'organe de sortie 4 peut comprendre une partie d'accouplement 31 partiellement sphérique insérée dans un logement 33 à l'extrémité du tiroir de vanne. Un ressort de rattrapage de jeu 29 précontraint dans le logement 33 appui la partie d'accouplement 31 contre une butée dans le logement afin d'éliminer le jeu de positionnement dans la direction transversale *T* entre l'organe de sortie 4 et le tiroir de vanne 13.

Le boîtier 2 de l'actionneur électrique comprend une base 14 et un couvercle 16 qui ferme le côté ouvert de la base. La base 14 du boitier forme un volume à l'intérieur duquel le moteur 6, le réducteur 8 et le circuit électronique 10 sont montés. Le couvercle 16 et la base 14 peuvent avantageusement être fabriqués en une matière plastique injectée, le bord du couvercle 16 étant soudé au bord de la base 14, par exemple par soudage par ultrasons ou par laser, afin d'assurer une fermeture hermétique entre le couvercle 16 et la base 14.

Le moteur 6 comprend un rotor 18 et un stator 20. Le moteur est avantageusement sous forme d'un moteur sans balais à courant continu (brushless DC motor).

Dans une forme d'exécution, le rotor 18 comprend un aimant 30 formant une pluralité de pôles magnétiques, par exemple un aimant sous forme cylindrique comportant une pluralité de segments magnétisés de polarités alternées disposés sur la circonférence du cylindre. Le rotor 18 peut avantageusement comprendre une culasse 34 disposée coaxialement à l'intérieur de l'aimant cylindrique, la culasse 34 étant formée d'un matériau avec une haute perméabilité magnétique, tel que du fer doux.

Dans une forme d'exécution avantageuse, la culasse 34 et l'aimant 30 sont montés dans un support 68 en matière plastique surmoulée, le support comprenant des brides 69a, 69b s'étendant radialement au-dessus des extrémités axiales de la culasse 34 et de l'aimant 30. Le diamètre extérieur de la culasse 34 est légèrement inférieur au diamètre intérieur de l'aimant 30, le jeu entre ces deux diamètres étant dans une gamme de 50 à 200 microns, configurée pour compenser une différence de dilatation thermique entre la culasse 34 et l'aimant 30. Afin de maximiser l'efficacité magnétique et en conséquence le couple résiduel du moteur, l'espace entre la culasse 34 et l'aimant 30 devrait être aussi faible que possible tout en permettant un jeu suffisant pour les différences de dilation thermique et aussi pour permettre un assemblage aisé de la culasse 34 dans l'aimant 30.

Le surmoulage des brides radiales au-dessus des extrémités axiales de la culasse 34 et de l'aimant 30 permet avantageusement de fixer l'aimant 30 à la culasse 34 avec le plus faible jeu voulu sans nécessiter l'utilisation d'une colle ou d'un autre moyen de fixation entre la culasse 34 et l'aimant 30.

Le support 68 peut en outre comprendre un pignon 40 solidaire du support 68, par exemple avantageusement formé d'une matière plastique injectée en même temps que le support 68. Le support 68 peut être creux afin d'insérer un axe 36, des roulements 38 étant montés aux extrémités de l'axe 36 afin de supporter le rotor en rotation dans le boîtier 2.

Le stator 20 comprend une armature magnétique 42 et des bobines 44 montées sur des bras de l'armature magnétique 42. L'armature magnétique 42 est dans un matériau avec une haute perméabilité magnétique tel que du fer doux. Les dents 50 de l'armature magnétique 42 définissent un certain nombre de pôles magnétiques. Les bobines 44 sont formées par des fils conducteurs connectés à des bornes électriques 54.

Les bornes électriques 54 peuvent être formées de pièces étampées. La paire de bornes 54 pour les deux extrémités d'un fil 45 d'une bobine peut avantageusement être formée d'une seule pièce étampée surmoulée par la matière plastique supportant l'armature 42 et les bobines 44, un pont 55 entre les deux bornes 54 étant ensuite découpé après l'opération de surmoulage ou lorsque la pièce étampée est encore dans le moule de surmoulage. Les bornes peuvent aussi être insérées dans la matière plastique supportant l'armature. Les bornes électriques 54 peuvent avantageusement comprendre une partie de connexion à sertir 57 au fil de la bobine, permettant une fabrication automatisée et rapide des bobines et de leur interconnexion au circuit électronique 10. Les bornes peuvent avantageusement comprendre une partie sous forme de broches orientés dans une direction axiale A configurés pour être insérés dans des trous conducteurs complémentaires d'une carte de circuit 24 du circuit électronique 10.

L'armature magnétique 42 et les bobines 44 peuvent avantageusement être directement surmoulées dans la matière plastique formant la base 14, y compris avec les bornes électriques 54 prêtes à être couplées à la carte de circuit 24.

Le rotor 6 peut être inséré axialement dans le stator qui est directement intégré dans la base du boîtier.

Le réducteur 8 comprend des roues d'engrenage 22 comprenant une première roue 46 et une deuxième roue 48. La première roue 46 comprend une couronne dentée 58 engageant le pignon 40 du rotor 18. Un axe 59 supportant la rotation de la première roue 46 est monté aux extrémités dans des logements formés dans la base 14 et dans le couvercle 16. De même, la deuxième roue 48 comprend un axe 63 monté aux extrémités des logements formés dans la base et le couvercle.

Les axes 59 et 63, comme le rotor 18 et les roues d'engrenage 22 ainsi que la carte de circuit 24, peuvent tous être assemblés dans une direction axiale A dans la base 14 permettant de simplifier les opérations d'assemblage.

La deuxième roue 48 du réducteur 8 comprend un pignon 62 qui engage la crémaillère 5. La crémaillère 5 peut être supportée à son dos par un roulement 79 de sorte à ce que la crémaillère 5 comprenne un support des deux côtés opposés pour les guider dans la direction transversale *T* de déplacement linéaire de l'organe de sortie 4.

Par rapport au rotor 18 du moteur 6, la couronne dentée 60 de la deuxième roue 48 est disposée de l'autre côté de la carte de circuit 24 par rapport à l'aimant 30 du rotor 18. La carte de circuit 24 comprend avantageusement des parties découpées 74, 72, une première découpe 72 permettant le passage axial de la carte de circuit 24 pour faire le tour partiel du pignon 40 et de la couronne dentée 58 de la première roue 46 qui est disposée à la hauteur de la carte de circuit. La carte de circuit 24 peut donc être disposée juste au-dessus d'une extrémité axiale de l'aimant 30 du rotor 18, des capteurs de position à effet Hall 26 étant disposés sur la carte de circuit 24 au-dessus des segments magnétiques 32 de l'aimant 30.

Les sondes magnétiques 26a, 26b, 26c, par exemple des capteurs à effet Hall, peuvent avantageusement être disposées à proximité l'une de l'autre, les sondes étant notamment écartées d'un angle *α* autour de l'axe de rotation du rotor inférieur à 60 degrés. En d'autres termes, les sondes sont disposées dans un arc de cercle autour du rotor inférieur à 60 degrés. Dans l'exemple illustré, il y a trois sondes magnétiques 26a, 26b, 26c, mais dans des variantes il est possible d'avoir deux, quatre, ou plus de sondes pour détecter la position et la vitesse du rotor. Pour un rotor formé de 5 paires de pôles, les sondes 26a, 26b, 26c peuvent notamment avoir un angle de 24 degrés entre sondes adjacentes afin de former un angle électrique de 120 degrés. La disposition des sondes magnétiques 26a, 26b, 26c selon la forme d'exécution de l'invention décrite ci-dessus, permet de réduire la taille de la carte de circuit 24 et laisser plus de place pour le stator 20 et le réducteur 8 afin de réduire l'encombrement, notamment dans la direction axiale *A* de l'actionneur. Les sondes magnétiques 26 permettent de détecter la position et la vitesse du rotor 18 dans une configuration très compacte et économe.

Le stator 20 du moteur comprend une armature magnétique 42, trois bobines 44 montées sur des branches de l'armature magnétique disposées de manière asymétrique autour du rotor 18, et notamment disposées dans un arc de cercle autour du rotor 18 de moins de 180 degrés. Des pôles du stator du côté opposé des bobines 44 sont formés par des dents 50 de l'armature sans bobines, cela permettant d'avoir un stator 30 de faible diamètre du côté opposé des bobines. L'axe 59 de la première roue 46 du réducteur 8 est monté à côté de la partie du stator 20 sans bobines afin d'avoir une faible distance avec l'axe du rotor 18 pour réduire le diamètre de la première roue 46, pour une configuration compacte.

La couronne dentée 60 de la deuxième roue 48 est disposée au-dessus de la carte de circuit 24, le pignon 62 de la deuxième roue 62 s'étendant à travers une découpe 74 de la carte de circuit pour engager la crémaillère 5 disposée en-dessous de la carte de circuit 24. La deuxième roue 48 peut avantageusement comprendre un marqueur de position 64 disposé sur une face de la couronne dentée 60 vis-à-vis de la carte de circuit 24. Un détecteur de position 28 peut être monté sur la carte de circuit 24 sous le marqueur de position 64. Dans une variante avantageuse, le détecteur de position 28 peut être sous forme d'un capteur à effet Hall et le marqueur de position 64 peut être sous forme d'un aimant annulaire, par exemple un aimant annulaire segmenté permettant au capteur à effet Hall de détecter le déplacement de la deuxième roue 48. La deuxième roue 48 étant couplée directement à la crémaillère 5, le détecteur de position 28 de la couronne dentée 60 permet de fournir la position de l'organe de sortie 4. L'intégration du détecteur de position 28 directement sur la carte de circuit 24 permet d'avoir une disposition particulièrement compacte et économe tout en assurant la fiabilité de positionnement de l'organe de sortie. Dans une variante, le marqueur de position 64 et la sonde peuvent être optiques. Par exemple le marqueur de position 64 peut comprendre des segments clairs et foncés et le détecteur de position 28 sur la carte de circuit 24 comprend une source lumineuse et un capteur optique pour détecter le passage des segments.

Le circuit électronique 10 peut comprendre des condensateurs 66 servant notamment au filtrage d'interférences électriques. Ces condensateurs 66 prennent un certain volume et peuvent être disposés sur la carte de circuit 24 orientés vers la base 14 du boîtier 2, du même côté que le rotor 18.

Le circuit électronique 10 peut être connecté à une commande externe par un connecteur 12, le boîtier du connecteur étant formé de manière solidaire avec la base 14 du boîtier. Des bornes électriques 78 du connecteur 12 peuvent être surmoulées directement dans la base 14 du boîtier, les bornes 78 comprenant des parties de connexion sous forme de broches 81 orientées axialement pour une connexion de type « press-fit » avec des trous conducteurs de la carte de circuit 24 lorsque celui-ci est inséré axialement dans la base 14 du boîtier lors de son assemblage.

Avantageusement, le surmoulage du stator 20 du moteur 6, de la connectique des bobines 44 du moteur, et des bornes électriques 78 du connecteur 12 directement dans la base 14 du boîtier, en formant aussi les paliers pour les roulements du rotor ainsi que les logements pour les axes de rotation des roues d'engrenage dans la base permettent de fournir un actionneur économe et très compact. La disposition de la deuxième roue d'engrenage 60 du réducteur 8 au-dessus de la carte de circuit 24, engageant la première roue d'engrenage 58 en-dessous de la carte de circuit 24, avec le pignon 62 passant à travers une découpe dans la carte 24, permet d'avoir un faible encombrement dans la direction axiale *A*, tout en offrant une grande réduction, ce qui permet d'utiliser un moteur sans balais à haute vitesse et fournissant un couple résiduel élevé. Par ailleurs, la disposition des bobines du moteur ainsi que des sondes de position 26a, 26b, 26c du rotor dans un arc de cercle réduit, permettent de disposer la première roue d'engrenage proche du rotor tout en gardant la hauteur axiale de l'actionneur faible.

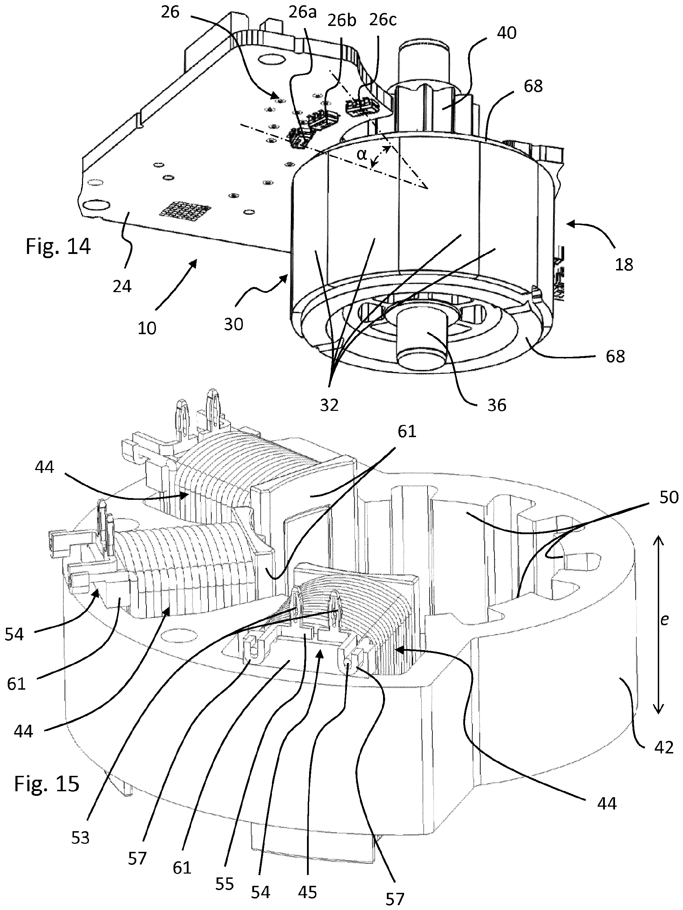

L'actionneur électrique selon l'invention est très compact et notamment est caractérisé par des ratios de dimensions (voir figures 8, 10, 11, 12, 15) décrits ci-dessous.

Selon un aspect avantageux de l'invention, le ratio *e*/*E* de l'épaisseur e du stator, incluant l'épaisseur de bobinage, sur l'épaisseur *E* de l'actionneur électrique est supérieur à 0.45, la direction de mesure de l'épaisseur étant la direction d'empilement ou de juxtaposition des vannes hydrauliques formant la commande hydraulique.

Selon un aspect avantageux de l'invention, le ratio *L*/*E* de la longueur *L* de l'actionneur électrique 3 sur l'épaisseur *E* de l'actionneur électrique est supérieur à 2.5 et inférieur à 4, la direction de mesure de la longueur étant orthogonale à la direction d'empilement des vannes hydrauliques formant la commande hydraulique et la direction d'actionnement du tiroir de vanne.

Selon un aspect avantageux de l'invention, le ratio *H*/*E* de la hauteur *H* de l'actionneur électrique 3 sur l'épaisseur *E* de l'actionneur électrique est supérieur à 2 et inférieur à 3.5, la direction de mesure de la hauteur étant la direction d'actionnement du tiroir de vanne.

Ces ratios avantageux permettant de fournir un actionneur compact sont résumés dans le tableau suivant :

| *L*/*E* | *H*/*E* | *e*/*E* |
|---|---|---|
| >2.5 | >2 | >0.45 |
| <4 | <3.5 | |

A titre d'illustration, des exemples d'actionneurs électriques selon des formes d'exécution avantageuses de l'invention peuvent avoir les dimensions suivantes :

**Dimensions en mm**

| Actionneur | | | Stator | Ratios et différences | | | |
|---|---|---|---|---|---|---|---|
| Epaisseur (*E*) | Longueur *(L)* | hauteur (*H*) | Epaisseur (*e*) | *L*/*E* | *H*/*E* | *e*/*E* | *E-e* |
| 40 | 125 | 100 | 22 | 3.1 | 2.5 | 0.55 | 18 |
| 32 | 125 | 100 | 16 | 3.9 | 3.1 | 0.50 | 16 |
| 48 | 125 | 100 | 30 | 2.6 | 2.1 | 0.63 | 18 |

### Liste des références dans les figures

**Commande hydraulique 1**
   **Vanne hydraulique**
      **Distributeur hydraulique 11**
         Corps 19
         Tiroir de vanne 13
            Logement 33
            Ressort de rattrapage de jeu 19
         Ressort de rappel 15
         Canaux hydrauliques 17
      Interface 21
         Capuchon 25
            chambre de ressort 27
            joint 29
   **Actionneur 3**
      **Boitier 2**
         Base 14
         Couvercle 16
         Logement 23 (pour recevoir le ressort de rappel)
      **Organe de sortie 4**
         Crémaillère 5
            Roulement de guidage 79
         Axe 7
            Partie d'accouplement 31
               Tête sphérique
      **Moteur 6**
         **Rotor 18**
            Aimant 30
               Pôles 32
            Culasse 34
            Axe 36
            Paliers 38
               Roulement
            Pignon 40
            Support 68 (surmoulage)
               bride 69
         **Stator 20**
            Armature magnétique 42
               Dents 50
            Bobine 44
               Fil conducteur 45
               Bornes électriques 54
                  Pont 55
                  partie de connexion à sertir 57
                  broches de connexion 53
            surmoulage 61
      **Réducteur 8**
         Roues d'engrenage 22
            Première roue 46
               Pignon 56
               Couronne dentée 58
               Axe 59
            Deuxième roue 48
               Couronne dentée 60
                  Marqueur de position (aimant) 64
               Pignon 62
               Axe 63
**Circuit électronique 10**
   **Carte de circuit 24**
      découpe 72 (pour la première roue d'engrenage)
      découpe 74 (pour pignon de sortie)
   Capteur de position du rotor 26
      Sondes magnétiques (à effet Hall) 26a, 26b, 26c
   Capteur de position de la deuxième roue 28
   Condensateurs 66
**Connecteur 12**
   Bornes 78
      broches 81

## Revendications

1. **Commande hydraulique (1)** comprenant au moins une vanne hydraulique, chaque vanne hydraulique comportant un distributeur hydraulique (11) et un actionneur électrique (3), le distributeur hydraulique comprenant un corps (19) avec des canaux hydrauliques (17) et un tiroir de vanne (13) monté coulissant dans le corps (19), l'actionneur électrique étant fixé audit corps et comprenant un moteur électrique (6), un circuit électronique (10) comportant une carte de circuit (24), un organe de sortie (4) à déplacement linéaire couplé au tiroir de vanne, un réducteur (8) comportant des roues d'engrenage (22) couplant le moteur à l'organe de sortie, et un boîtier (2) dans lequel le moteur électrique (6), le circuit électronique (10) et le réducteur (8) sont montés, **caractérisée en ce que** le moteur est un moteur à courant continu sans balais commandé en boucle fermée.

2. Commande hydraulique selon la revendication 1, **caractérisée en ce que** un ratio *e*/*E* d'une épaisseur e du stator, incluant l'épaisseur de bobinage, du moteur électrique sur une épaisseur *E* de l'actionneur électrique est supérieur à 0.45, la direction de mesure de l'épaisseur étant une direction d'empilement des vannes hydrauliques formant la commande hydraulique.

3. Commande hydraulique selon la revendication 1 ou 2, **caractérisée en ce que** un ratio *L*/*E* d'une longueur *L* de l'actionneur électrique sur une épaisseur *E* de l'actionneur électrique est supérieur à 2.5 et inférieur à 4, la direction de mesure de la longueur étant orthogonale à une direction d'empilement des vannes hydrauliques formant la commande hydraulique et une direction d'actionnement du tiroir de vanne.

4. Commande hydraulique selon la revendication 1, 2 ou 3, **caractérisée en ce que** un ratio *H*/*E* d'une hauteur *H* de l'actionneur électrique sur une épaisseur *E* de l'actionneur électrique est supérieur à 2 et inférieur à 3.5, la direction de mesure de la hauteur étant la direction d'actionnement du tiroir de vanne.

5. Commande hydraulique selon l'une des revendications précédentes, **caractérisée en ce que** les roues d'engrenage (22) incluent au moins une première roue (46) et une deuxième roue (48), la première roue (46) comprenant une couronne dentée (58) engageant un pignon (40) du moteur et un pignon (56) engageant une couronne dentée (60) de la deuxième roue (48), la couronne dentée (60) de la deuxième (48) roue étant disposée sur un côté opposé de la carte de circuit (24) au moteur électrique, la deuxième roue (48) étant disposée du côté d'un couvercle (16) du boîtier (2) et le moteur électrique étant monté dans la base (14) du boîtier (2).

6. Commande hydraulique selon la revendication précédente, **caractérisée en ce que** la couronne dentée (58) de la première roue (46) est disposée à la hauteur de la carte du circuit, dans une découpe de la carte de circuit.

7. Commande hydraulique selon l'une des deux revendications précédentes, **caractérisée en ce que** la deuxième roue (48) comprend un marqueur de position (64) disposé sur une face de la couronne dentée (60) vis-à-vis de la carte de circuit (24) et un détecteur de position (28) est monté sur la carte de circuit (24) sous le marqueur de position (64).

8. Commande hydraulique selon la revendication précédente, **caractérisée en ce que** le détecteur de position (28) est sous forme d'un capteur à effet Hall et le marqueur de position (64) est sous forme d'un aimant annulaire.

9. Commande hydraulique selon l'une des quatre revendications précédentes, **caractérisée en ce que** la deuxième roue (48) du réducteur comprend un pignon (62) qui engage une crémaillère (5) connectée à l'organe de sortie (4) à déplacement linéaire.

10. Commande hydraulique selon l'une des revendications précédentes, **caractérisée en ce que** le moteur comprend un rotor (18) comportant un aimant définissant une pluralité de pôles de rotor, la carte de circuit étant disposée au-dessus d'une extrémité axiale de l'aimant (30) du rotor, des sondes magnétiques (26a, 26b, 26c) étant disposées sur la carte de circuit (24) au-dessus des segments magnétiques (32) de l'aimant, les sondes magnétiques (26a, 26b, 26c) étant disposées dans un arc de cercle autour du rotor d'un angle (α) inférieur à 60 degrés.

11. Commande hydraulique selon l'une des revendications précédentes, **caractérisée en ce que** le moteur comprend un rotor (18) comportant un aimant (30) sous forme cylindrique et une culasse (34) disposée coaxialement à l'intérieur de l'aimant cylindrique (30), la culasse (34) et l'aimant (30) étant montés dans un support (68) en matière plastique surmoulée, le support (68) comprenant des brides (69a, 69b) s'étendant radialement au-dessus des extrémités axiales de la culasse et de l'aimant.

12. Commande hydraulique selon l'une des revendications précédentes, **caractérisée en ce que** jeu entre le diamètre extérieur de la culasse (34) et le diamètre intérieur de l'aimant (30) est dans une gamme de 50 à 200 microns.

13. Commande hydraulique selon l'une des deux revendications précédentes, **caractérisée en ce que** le support (68) comprend un pignon (40) solidaire du support formé d'une matière plastique injectée.

14. Commande hydraulique selon l'une des revendications précédentes, **caractérisée en ce que** le moteur comprend un stator (20) comportant une armature magnétique (42) et une pluralité de bobines (44) montées sur des branches de l'armature magnétique (42) disposées dans un arc de moins de 180 degrés autour de l'axe de rotation du rotor, un axe (59) de rotation de la première roue (46) du réducteur étant monté à côté d'une partie du stator sans bobines.

15. Commande hydraulique selon l'une des revendications précédentes, **caractérisée en ce que** l'armature magnétique (42) et les bobines (44), y compris avec des bornes électriques (54) pour la connexion à une carte de circuit (24), sont surmoulées dans la matière plastique formant la base (14) du boitier (2).

16. Commande hydraulique selon l'une des revendications précédentes, **caractérisée en ce que** le moteur comprend des fils conducteur des bobines sont connectés à des bornes électriques (54) formées de pièces étampées insérées dans ou surmoulées par une matière plastique formant intégralement la base du boitier et supportant l'armature (42) et les bobines (44).

17. Commande hydraulique selon l'une des revendications précédentes, **caractérisée en ce que** l'actionneur électrique comprend un connecteur (12) pour connecter le circuit électronique (10) à une commande externe, un boîtier du connecteur (12) étant formé de manière solidaire avec la base du boîtier (2), des bornes électriques (78) du connecteur étant surmoulées dans la base du boîtier (2) et comprenant des parties de connexion orientées axialement pour une connexion avec la carte de circuit (24).

18. Commande hydraulique selon l'une des revendications précédentes, **caractérisée en ce qu'**il comprend un ressort de rappel (15) précontraint agissant sur le tiroir de vanne (13), le ressort de rappel étant monté à une interface entre le corps (19) du distributeur et l'actionneur électrique, dans un logement (23) formé dans le boitier (2) de l'actionneur électrique.
